Europäisches Patentamt

European Patent Office

Office européen des brevets

(11) Publication number: **0 480 253 A2**

# EUROPEAN PATENT APPLICATION

(21) Application number: **91116408.5**

(22) Date of filing: **26.09.91**

(51) Int. Cl.5: **B29C 55/08**, B29D 28/00, B29D 7/00

(30) Priority: **11.10.90 IT 2170890**

(43) Date of publication of application:
**15.04.92 Bulletin 92/16**

(84) Designated Contracting States:
**AT BE CH DE DK ES FR GB GR IT LI LU NL SE**

(71) Applicant: **FIBRONIT S.r.l.**
**Via Mameli, 4**
**I-15033 Casale Monferrato (Alessandria)(IT)**

(72) Inventor: **Vittone, Andrea**
**Viale Regina Margherita, 7**
**I-20122 Milan(IT)**

(74) Representative: **Gervasi, Gemma, Dr. et al**
**NOTARBARTOLO & GERVASI Srl 33, Viale**
**Bianca Maria**
**I-20122 Milano(IT)**

(54) **Device for transverse extension of retiform materials and in particular fibrillar polymeric film.**

(57) Within the scope of a process of known type consisting of sending said retiform materials to transverse extension (opening) devices having elements (4) for grasping the product, e.g. needles (13), which run on opening elements, e.g. divergent guides, (8) and are towed by translation elements, e.g. chains, (3, 11, 21) the device in accordance with the present invention makes it possible to reduce in a controlled manner the distance between the product grasping elements (4) during the opening phase and subsequently maintain said reduced distance in such a manner that the translation speed of the material drawn by the grasping elements (4) can diminish progressively to compensate for the longitudinal retraction due to the transverse extension.

FIG 1

## Field of the invention

The invention described here relates to a device for a machine for the opening of textile and/or polymeric materials subject longitudinal to contraction during their transverse extension as happens for example with fibrillar polymeric film.

Said film has been long known and is employed among other things for reinforcing pasty matrices such as for example cement mixtures to obtain thin articles with high bending and shock resistance. Fibrillation of synthetic polymeric film is an operation which has been long known and consists of producing in the film, by means of nails, blades or other equivalent mechanical means, a plurality of substantially longitudinal slits. The film thus fibrillard is subsequently opened transversely to take on the retiform structure which allows for example impregnation thereof with pasty cement matrices and is stabilized in said open form.

The opening can reach values of 10-20 times the original width of the film and the longitudinal contraction can consequently take on values on the order of 15-40% of the original length of the film. If this contraction were not compensated for there would occur in the film distorsions and tensions such as to cause its breakage during opening.

Even in the field of treatment of fabric the transverse extension of textile materials is a long known conventional operation, in particular for light and deformable fabrics such as for example knitted fabrics, to stabilize the form thereof and is applied by conducting the fabric in divergent chain systems which carry rigidly constrained grasping elements for the edges of the film such as clamps, pincers or plates with needles, on machines termed rameuses or stenter frames where the open form is stabilized with hot air.

Rameuses machines of known type however allow limited transverse extension with values of approximately 1.2-1.5 times the original width, much less than those required by the fibrillar film and any limited longitudinal contraction is compensated for by reducing the speed of collection in relation to feed speed and over-feeding the fabric by means of waviness before its grasping by needles.

## Prior art

The operation of opening the fibrillar film is described in various patents.

In European patent no. 0.011.371 the tubular fibrillar film is opened by passing said film over an expansion form. Compensation for longitudinal shrinking is obtained by collecting the open film at the outlet of the form with speed less than that at which it was fed at the beginning of its running on the form. The open tubular film is preferably cut and the two flat films thus obtained are kept open during the stabilization phase by grasping members which draw the film along the opening element, overcoming the friction between the film and the edges of the form and the elastic resistance of the film without any specific film-grasping elements present in said crucial section of the machine and this is a serious shortcoming because it is a source of film breakage. In addition the process is limited to tubular film.

In European patent no. 0.009.294 the opening is obtained by conducting the edges of the film between two sets of roller pairs spaced apart and divergent progressively and having decreasing speeds.

The film-grasping elements here consist of rollers positioned with uniform spacing and which also act as translation elements for the product.

This process has the serious risk of detachment of the film from the grasping elements (the rollers) since grasping is entrusted only to the pressure of the rollers and the friction of the film. In European patent no. 075,306 the film is sent in wavy form obtained by thermal and mechanical operations to a conventional drying device or a textile thermostibilization device of the rameuse type consisting of divergent chains to which are rigidly constrained with uniform spacings the plates with needles drawn by the chain at uniform speed.

The edges of the undulated film are grasped by the needles which hold uniform their spacing and speed of translation. The film waviness compensates for the longitudinal contraction as the film flattens with progressive opening.

The shortcoming of this process is the fact that the thermal and mechanical effects necessary to obtain the waviness are detrimental to the mechanical characteristics of the product.

In European patent no. 0.021.017 the fibrillar film is fed to an opening system made up of a pair of divergent guides. At the beginning of the divergent section the edges of the film are grasped by pincers which are inserted with uniform spacing in the guides and run there freely, drawn in the opening phase directly by the film and not by mechanical members of the machine.

At the end of the divergent section and thus of the opening the pincers are connected rigidly to a pair of translating chains which draw the film into the following section with parallel guides where thermostabilization of the open form takes place.

In this process the grasping elements (pincers) can draw near together during opening to compensate for longitudinal contraction, running on the divergent guides, but instead of drawing the film they are towed by it since in this section they are completely disengaged from the translation elements. This makes possible high tension and breakage of the film if the pincers should accidentally develop excessive friction in running on the divergent guides. Outline of the invention

The device which is the object of the present invention overcomes the above shortcomings in a simple and effective manner since it employs as lateral grasping elements for the film the usual and tested systems long employed in textile technology such as clamps, pincers or needles running on divergent opening guides and drawn by translating chains but partially disengages their travel from that of the chains to permit said grasping elements to draw together in the direction opposite the direction of travel of the product during opening and to keep said distance reduced in the following section although still conducted by the translation chains.

The reciprocal approach of the grasping elements in the opening phase and holding their distances in the following stabilization section cause the product to be drawn at the edges at a progressively decreasing speed such as to compensate for longitudinal contraction without being subject to thermal of harmful and undesirable mechanical stresses as takes place or can take place by adopting the known devices described above.

**Detailed description of the invention**

The invention is better described with reference to some nonlimiting examples of embodiments illustrated in the annexed figures wherein:

- FIG. 1 shows schematically a machine of known type on which there can be mounted the device in accordance with the present invention,
- FIG. 2 shows a first example of embodiment of the present invention,
- FIG. 3 shows a second example of embodiment of the present invention,
- FIG. 4 shows further details of a third example of embodiment of the present invention as illustrated in FIG. 2D,
- FIGS. 5 and 6 show some details of a possible form of embodiment of the devices in accordance with the present invention illustrated in FIGS. 2, 3 and 4,
- FIG. 7 shows a further embodiment of the device shown in FIG. 3.

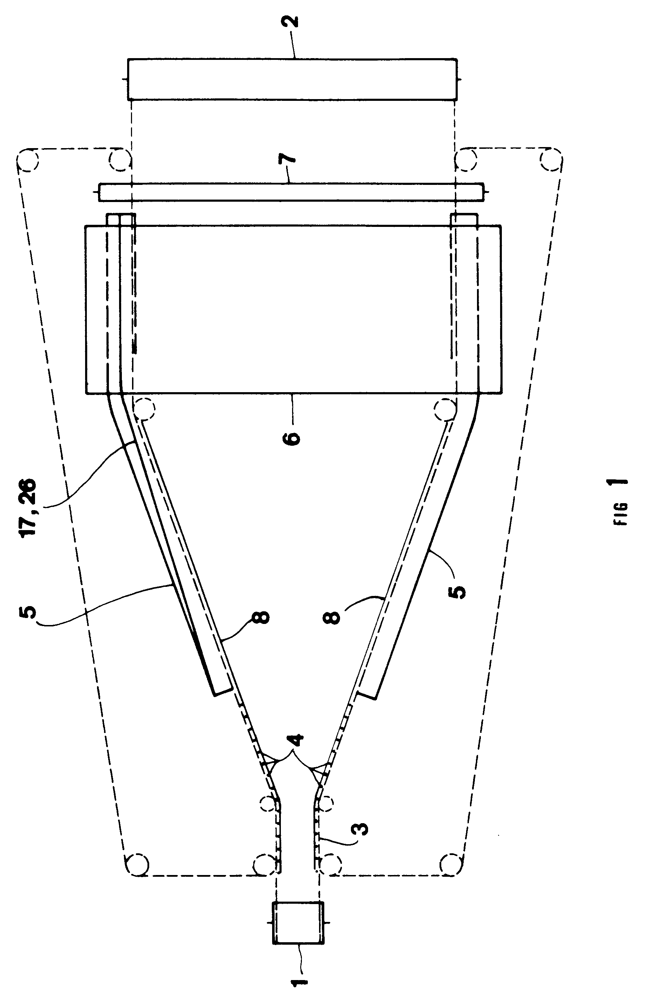

FIG. 1 shows the general diagram of a machine for opening products subject to contraction in length during transverse extension such as for example the fibrillar polymeric films wherein the reciprocal approach of the grasping elements is accomplished with one of the devices shown in the following figures.

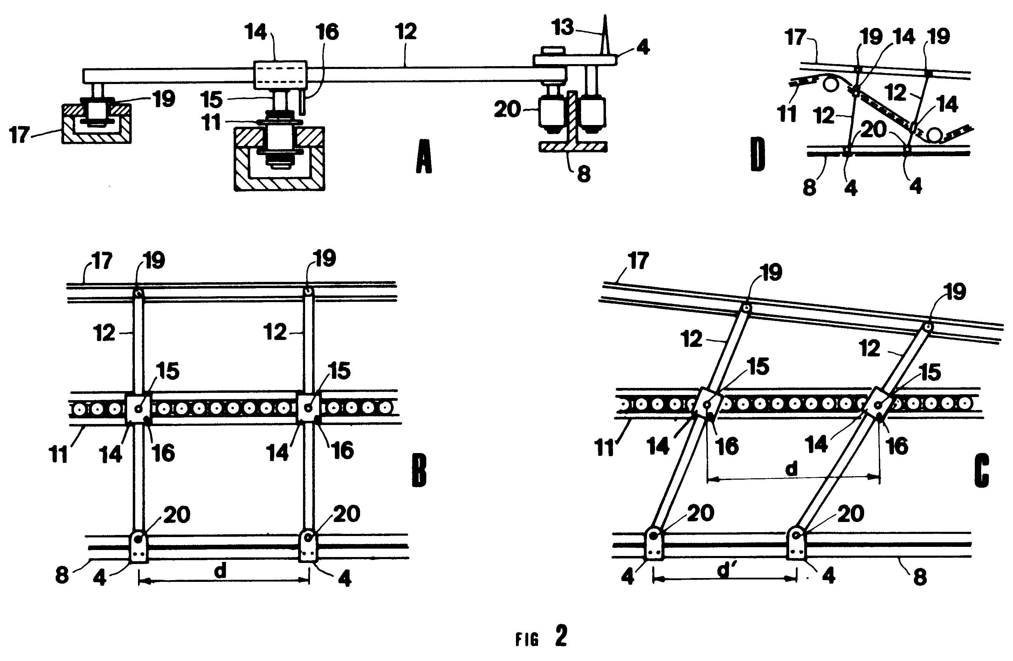

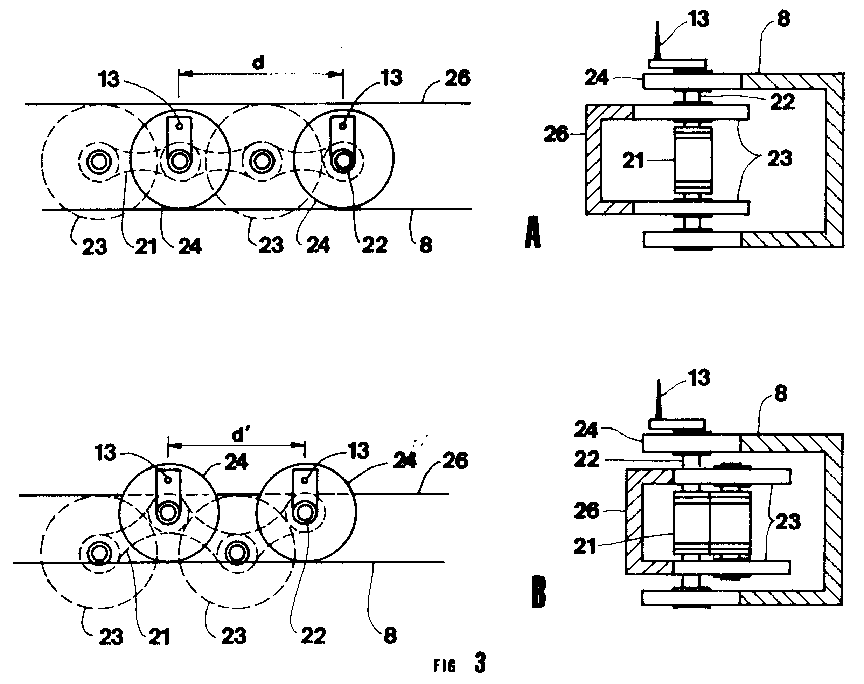

FIG. 1 shows schematically or in blocks:
- the product to be opened 1 which can be made up of one or more overlaid layers fed by one or more spools or by production systems;
- the open product 2 collected on spools with one or more layers;
- translation elements 3, e.g. a pair of chains with rollers vertical thereto closed in a loop and on which there are the grasping elements 4, e.g.plates with needles, for the edges of the product
- the opening elements 8 consisting of a pair of divergent guides in which run the chains 3 which can be arranged open and symmetrical (as shown in FIG. 1) or asymmetrical according to needs of the product to be opened; in particular one of the guides 8 can be nondivergent or have a divergence in relation to the central axis of the machine different from that of the other guide 8;
- the approach devices 5 for the grasping elements 4 which permit compensation for the longitudinal contraction both in the opening section and in the following one where the speed of translation of the product is lower than the entry speed; the FIG. shows schematically on only one side of the machine the operation of the moving guides 17, 26 for the approach devices in accordance with the present invention which are described with reference to FIGS. 2 and 3; it is noted that, in the machine illustrated in the FIG. the approach devices 5 do not affect the initial section of the divergent guides 8 where the longitudinal contraction to be compensated for is negligible;
- the stabilization section 6 of the open form, which can be for example a hot-air oven for polymeric products, where there are optionally applied sizing, resining, cohesioning, etc.; the stabilization section 6 can take on forms and dimensions different from those diagramed in the FIG. 1 including for example part of the divergent section of the guide 8, without affecting the correct operation of the invention; and
- a release roller 7 for detaching the product from the needles. Where possible, in the subsequent FIGS. the same element is identified by the same reference number.

With reference to FIGS. 2, 3, 4, 5 and 7 there are indicated by way of example three devices which permit the film-grasping elements (plates with pincers or needles) to draw together in a controlled manner even though they are still conducted by the divergent chains, accomplishing in the drawn film linear speeds lower than those of the chains.

FIGS. 2B and 2C show a portion of a translation device 3 (FIG. 1) for fibrillar film consisting of a motorized roller chain 11 to which are connected in a nonrigid manner rigid rods of uniform length 12 on which are mounted the grasping elements 4 such as for example plates with needles 13 (FIG. 2A).

As indicated in FIG. 2 and in particular in FIG. 2A the rods 12 can run in the sleeve 14 which connects them to the chain 11 but can also be inclined toward the chain thanks to the pin 15 fixed to the chain links.

Inclination of the rods takes place naturally in the direction of travel of the needles 13 but a stop 16 prevents inclination in the opposite direction.

Inclination of the rods is caused by the variable and adjustable distance between the guides 17 and 8 on which the ends of the rods run by means of the rollers 19 and 20.

The guide 8 delimits the field in which there moves the product drawn by the needles 13 and thus holds its position steady for each type of product and opening while the guide 17 has the possibility of varying its distance from the guide 8, forcing the rods 12 to incline in the direction of movement as shown in FIG. 2C.

As the inclination of the rods 12 increases the pitch d' between the needles 13 decreases and the speed of said needles decreases gradually to compensate for the longitudinal contraction due to the transverse extension.

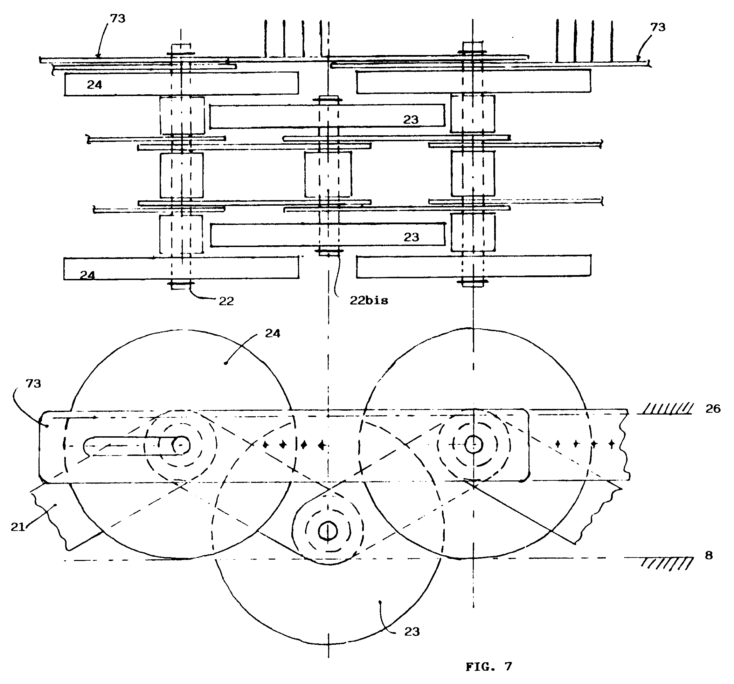

FIGS. 3A, 3B and 7 show a second type of entraining device for the product in which 21 there is a chain whose links are united alternately by shafts 22 or 22bis which bear the pairs of wheels 24 or 23 respectively characterized by two different values of gauges, to wit the wheels 24 lie in planes outside those in which lie the gears 23. The chain can be of the drilled pin type through which pass alternately the shafts 22 or 22bis. The shafts 22 of the external gears 24, or the shafts 22bis, appropriately extended bear the grasping elements for the edges of the product represented in FIG. 3A by the needles 13.

In the case just described the grasping elements are free to rotate around an axis consisting of the idling shaft 22. The grasping elements 4, e.g. plates with needles 13, can as an alternative be fixed to plates 73 of FIG. 7 having at one end a circular hole and at the other end a hole with elongated shape mounted on the projecting ends of the shafts 22 as shown in FIG. 7 or the shafts 22bis appropriately lengthened and in this case the grasping elements are not oscillating and their trajectory during the opening phase of the fabric has more regular geometry.

The two sets of gears 24 and 23 rest on the guides 8 and 26 respectively where the guide 26 is mobile in relation to the guide 8.

When the guide 26 approaches the guide 8 the links of the chain are forced to incline and the gears 24 approach each other, drawing near the needles 13 and compensating for the longitudinal contraction of the product.

A third device which permits drawing near of the grasping elements of the product is obtained by modifying the device described in FIGS. 2A 2B and 2C in such a manner that the translation elements 3, e.g. the roller chain 11, run over paths oblique to the path of the grasping elements, e.g. the needles 13, as shown in detail D of FIG. 2.

If $\alpha$ is the angle between an oblique section of the chain 11 having length d and p the corresponding path of the needles 13, there will be $p = d \cos \alpha$ where $p < d$.

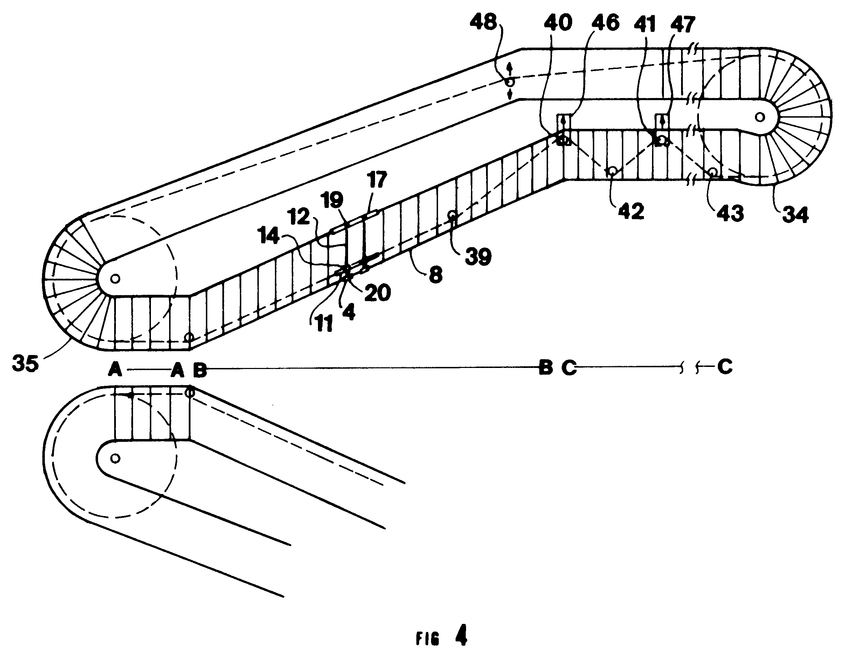

FIG. 4 describes diagrammatically said third transverse extension device. There is indicated only one side of the device in which the section A-A is the section where the product is fed and is grasped on the edges by the grasping elements 4, the section B-B is the section where the product is extended transversely and the section C-C is the section where the extended product undergoes subsequent treatments such as for example thermostabilization.

Considering the side of the device described here (the opposite side is only indicated in its initial section), there is noted the traction element indicated here by the roller chain 11 which runs over a loop moved by a motor (not shown) by means of the gear 34. To the chain 11 are connected with uniform spacing the rods 12 already described for FIG. 2A.

The connection between the rods 12 and the chain 11 is provided by the sleeve 14 running along the rod 12 and free to rotate in relation to the chain 11.

At the two ends the rods 12 bear the roller systems 19 and 20 which run against the guides 17 and 8.

Above the rollers 20 there are the grasping elements 4 consisting for example of a plate equipped with vertical needles 13.

The guides 8 and 17 hold the spacing uniform during their travel while the chain 11 varies its distance from the guide 8.

In the parallel section A-A and in part of the oblique section B-B the chain 11 runs parallel to the guide 8 but in the last part of the oblique section B-B where the longitudinal contraction effect of the product begins to be considerable, it follows an oblique path thanks to the snub pulleys 39 and 40, thus forcing the needles 13 to draw together.

In the following parallel section C-C diagramed only in its initial section, the chain 11 follows the path shown by broken line thanks to the snub pulleys 40, 41, 42 and 43, forcing the needles 13 to keep the close distance previously reached.

At the end of the section C-C the product is detached from the needles 13 by a conventional device not shown, for example an appropriately positioned roller, and the chain, still bearing the rods 12, passes over the gears 34 and 35.

Adjustment of the amount of approach of the needles 13 and hence of the contraction of the extensible product is carried out by moving transversely the snub pulleys 40 and 41 by means of the slides 46 and 47 while the gear 48 acts as a compensation means.

In the devices indicated above the bucking guides (17 of FIGS. 2 and 4 and 26 of FIG. 3) and the guides 8 must permit fluid running without forcing points of the rollers guided thereby, in particular where they change direction to bring about mutual approach of the grasping elements 4, needles 13 or pincers.

This is secured by known technologies.

By way of example, without limiting the principle of the invention, the purpose is achieved, (following for example British patent no. 1.080.915) by means of guides having the supporting surface of the rollers made of unbroken strips of a resistant, flexible and elastic material such as for example harmonic steel for springs or composite plastic material reinforced with fibres having a high elastic module.

Said strips are supported vertically by special bars connected together at the ends by articulated joints having their axis of rotation beneath the centre line of the above unbroken strips.

The bars can move transversely by rotating on the joints and running on special slides placed on a supporting plate and moved by actuators such as for example pneumatic cylinders, moving screws, etc.

In turn the slides can rotate on a vertical pin, again under the centre line of the elastic strips, so as to cause the slide to follow the circular movement imposed by the rotation of the bars in the plane of the supporting plate.

Therefore the bars united by the elastic strips and the articulated joints at the ends form a continuous guide for support of the rollers, in which the individual elements (the bars) can move transversely by rotating horizontally and forming a broken line in which however the zones of variation of direction are curved because of the elastic flexing of the unbroken strips.

Moving of the bucking guides (indicated in the devices of FIGS. 2 and 4 by reference number 17 and in the device of FIG. 3 and FIG. 7 by reference number 26) due to the effect of the actuators brings them close to the fixed guides 8.

Consequently there is inclination of the running rods 12 of FIG. 2 or inclination of the links of the chain 21 of FIG. 3 and FIG. 7 and hence approach of the grasping elements for the product 4 (needles 13 or pincers).

Since the approach beween the guides increases progressively in the direction of movement of the product, the drawing near between the grasping elements 4 also increases progressively as the transverse extension operation proceeds.

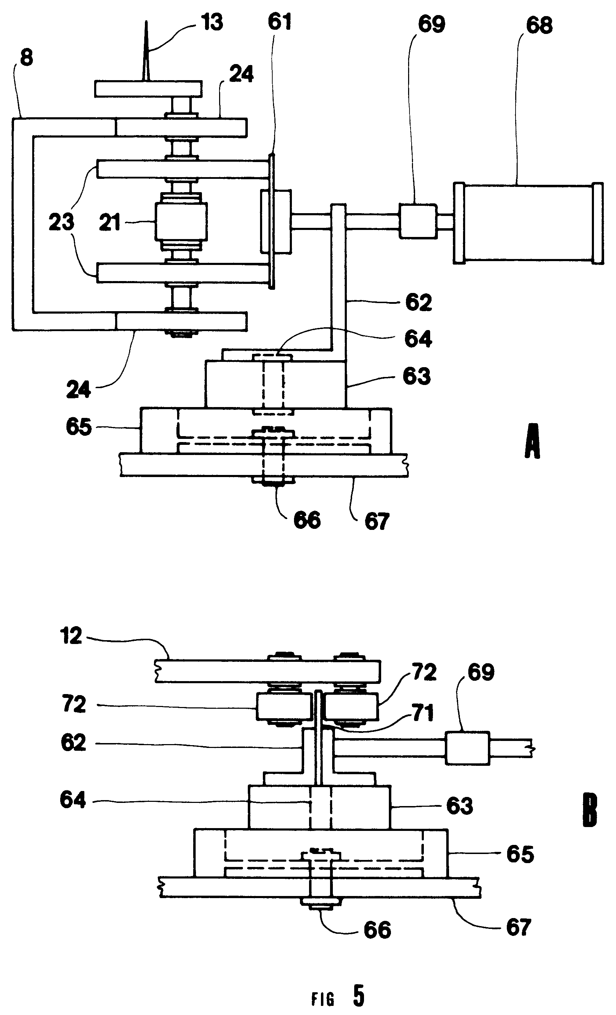

FIG. 5 shows examples of the above devices.

In detail A there is diagramed the continuous guide 61 which, in the device of FIG. 3, constitutes the mobile guide 26 which bucks the internal wheels 23 born by the roller chain with drilled pins 21 while in detail B the same continuous mobile guide system is applied to the device with running rods of FIG. 2.

In detail B there is noted the elastic and flexible continuous strip 71 which corresponds to the guide 17 of FIG. 2, on which rest on both sides the rollers 72 connected to one end of the running rod 12, the supports 62, the guide bar 63 with joint 64, the slides 65 with the rotation pin 66 connected to the support plate 67 and finally the joint 69 which connects the guide to moving actuators 68 not shown in the figures.

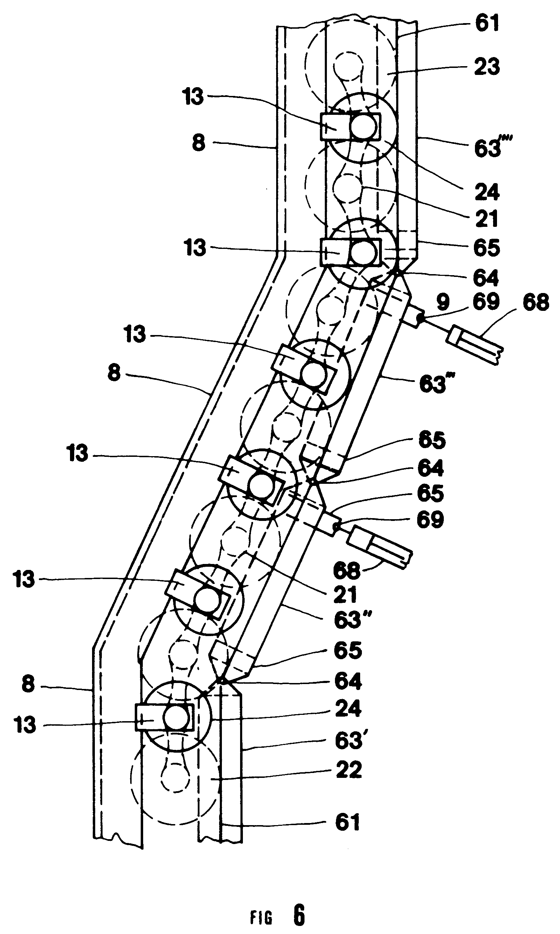

In FIG. 6 there is diagramed the assembly of four bars with continuous bucking guide applied to the device with the roller chain with drilled pins 21 with pitch variation illustrated in FIG. 3 and FIG. 7.

With reference to detail A of FIG. 5 and FIG. 6, 61 indicates the strip of elastic and flexible material which constitutes the guide 26 (FIG. 3) on which rest the internal wheels 23 of the roller chain with drilled pins 21, 8 indicates the fixed guide on which rest the external wheels 24, 62 indicates a rigid connection between the strip 61 and the guide bars 63, 64 indicates the articulated joints between the bars 63, 65 indicates the running slides of the guide bars 63, 66 indicates the rotation pins of the slides 65 which rotate in relation to the support plates 67, 68 indicates the movement actuators of the guides represented here as air cylinders, 69 indicates articulated connections between the actuators 63 and the supports 62 and finally 13 indicates the traction elements for the product and represented as needles.

In particular FIG. 6, which for graphic reasons is severely deformed in width, there are noted from below the bar 63' which bear the roller chain with drilled pins 21 in the straight inlet section of the film to be extended transversely without reciprocal approach of the guides 8 and of 26 (Fig. 3) and the needles 13, the following bar 63'' which begins the transverse extension section here also without reciprocal approach of the guides 8 and 26 and of the needles 13 because of the limited initial contraction of the film, the following bar 63''' which terminates the extension section and brings about reciprocal approach of the needles 13 and finally the bar 63'''' which constitutes the straight section with the product extended transversely, for which the movement actuator is not indicated and where reciprocal approach of the needles 13, accomplished by the previous section, is maintained.

Without going beyond the scope of the invention it is possible for one skilled in the art to modify the mechanical devices described by way of example in FIGS. from 2 to 5 and 7 and use devices equivalent to those described above on the basis of his own experience and the natural evolution of the specific art.

Finally, attention is drawn to the fact that the speed of translation of the means 3 and the amount of reciprocal movement of the approach devices 5 associated with one of the guides 8 can be different from those of the corresponding means 3 and 5 associated with the other guide 8. This allows using without appreciably modifications the above described devices even if one of the guides 8 is rectilinear or at least has a divergence angle different from that of the other guide 8.

**Claims**

1. Device for the transverse extension of retiform materials subject to contraction in length during transverse extension (widening), in particular fibrillar polymeric film, comprising two groups of members for lateral grasping of the product, said groups of grasping members being designed for running on a pair of guides which diverge at least for a section, in which there is effected widening of the material, followed by a parallel section in which the widened material is stabilized thermally or in some other known manner, characterized in that each group of grasping members (4) which run on one of said guides (8) is functionally connected to entraining means (3) having uniform motion and to which each grasping member (4) is connected at regular intervals and being guided by approach devices (5) designed for piloting along the section in which said guides (8) diverge the progressive reciprocal approach of two adjacent grasping members (4) to compensate for the contraction in length of the material during widening and also designed for maintaining the reduced distance thus achieved along the following parallel section of said guides (8).

2. Device in accordance with claim 1 characterized in that said entraining means (3) comprise a roller chain (11) and each of said approach devices (5) comprises a rigid rod (12) having one end hinged to one of said grasping members (4) in turn constrained to run along said first guide (8) and the other end constrained to run along a second guide (17), said rod (12) being free to run in a sleeve (14) connected by a pin (15) to a roller of said chain (11).

3. Device in accordance with claim 2 characterized in that:
   - the path of said roller chain (11) is parallel to that of the corresponding guide (8) and at the beginning of the divergent section of the first guides (8) the distance between said first guides (8) and the corresponding second guides (17) is equal to the length of said rods (12), said rods (12) being perpendicular to the first guide (8) and to the entraining means (11) and the distance (d) between two adjacent grasping members (4) being equal to the distance between the corresponding pins (15);
   - at least in the final part of the divergent section of said guides (8) the distance between each first guide (8) and the corresponding second guide (17) is progressively decreasing, forcing said rods (12), which run in the corresponding sleeve (14) and are free to rotate around the associated pin (15), to incline progressively in the direction of travel of the retiform material, thus reducing the distance (d') between the two adjacent grasping members (4) to compensate for the contraction in length of the retiform material due to the widening of said material;
   - in the following parallel section of said first guides (8) the distance between each first guide (8) and the corresponding second guide (17) is held uniform and equal to the distance between said guides (8,17) at the end of the preceding divergent section, forcing the rods (12) which are oblique and parallel to each other to maintain between two adjacent grasping members (4) the reduced distance (d') assumed at the end of the previous divergent section of the first guides (8).

4. Device in accordance with claim 2 characterized in that said sleeve (14) comprises a stop (16) designed for preventing rotation around the associated pin (15) in a direction opposite that of travel of the retiform material.

5. Device in accordance with claim 2 characterized in that the distance of at least one section of said second guides (17) from the corresponding section of said first guides (8) can be modified by means of slides or actuators (68).

6. Device in accordance with claim 2 characterized in that the second guide (17) is parallel to the first guide (8), said rods (12) are parallel with each other and, at least in the final part of the divergent section and in the following parallel section of the first guides (8), the roller chain (11) follows an angled path created by a plurality of snub pulleys (39,42,43) which are fixed in relation to the first guide (8) and a plurality of snub pulleys (40,41) which are mobile in relation to said guide (8), thus varying its own distance from the first guide (8).

7. Device in accordance with claim 6 characterized in that the positions of said mobile snub pulleys (40,41) can be modified by means of slides (46,47) or actuators (68).

8. Device in accordance with claim 1 characterized in that said entraining means (3) and approach means (5) comprise a chain 21, preferably a roller chain with drilled pins and that on the shafts (22) and (22bis), passing through said pins, are keyed alternately a pair of idling wheels (24) resting on said first guide (8) or a pair of idling wheels (23) inside the wheels of said first pair (24) and resting on a second guide (26) which is mobile in relation to the corresponding first guide (8) and that, reducing the distance between the first guide (8) and the second guide (26) the links of the roller chain with pins (21) are forced to incline, reducing the distance between the two adjacent pairs of first wheels (24) and consequently between two adjacent grasping members (4), each of which is rigidly connected to a wheel (24) of said first pairs.

9. Device in accordance with claim 8 characterized in that the grasping elements are born by plates (73) which connect only to the pins of the wheels (24) or (23), said plates being characterised by a normal circular hole for coupling to the pin of a wheel and an elongated hole which is used on the other pin to keep the alignment while allowing the pin running along the slot as a consequence of the pitch reduction.

10. Device in accordance with claim 8 characterized in that the position of said second guide (26) in relation to said first guide (8) can be modified by means of slides (65) or actuators (68).

FIG 1

FIG 2

EP 0 480 253 A2

FIG 3

FIG 4

FIG 5

FIG 6

FIG. 7